# NEW EUROPEAN PATENT SPECIFICATION

(11) **EP 2 832 963 B2**
(45) Date of publication and mention of the opposition decision: **07.08.2019**
(45) Mention of the grant of the patent: 20.04.2016
(21) Application number: 14178415.7
(22) Date of filing: 24.07.2014
(51) Int. Cl.: F01N 3/08, F01N 3/035, F01N 13/00

(54) **Exhaust gas purifying device of internal combustion engine**
Abgasreinigungsvorrichtung eines Verbrennungsmotors
Dispositif de purification de gaz d'échappement pour moteur à combustion interne

(30) Priority: 29.07.2013 JP 2013156849
(43) Date of publication of application: 04.02.2015
(73) Proprietor: Mitsubishi Jidosha Kogyo Kabushiki Kaisha, Tokyo 108-8410 (JP)
(72) Inventor: IWACHIDO, Kinichi, Tokyo, 108-8410 (JP)
(74) Representative: Vossius & Partner Patentanwälte Rechtsanwälte mbB

(56) References cited:
- EP-A1- 2 161 420
- EP-A1- 2 241 731
- EP-A2- 0 935 055
- EP-B1- 1 797 288
- WO-A1-01/74476
- WO-A1-2004/079170
- WO-A1-2012/166868
- WO-A1-2015/085300
- WO-A1-2015/085303
- WO-A1-2015/085305
- WO-A2-2005/047663
- CA-A1- 2 577 621
- GB-A- 2 450 578
- JP-A- 2007 075 707
- US-A1- 2006 100 098
- US-A1- 2008 012 097
- US-A1- 2008 295 490
- US-A1- 2012 159 927
- US-B1- 6 391 822

## Description

### BACKGROUND OF THE INVENTION

### Field of the Invention

The present invention relates to an exhaust gas purifying device of an internal combustion engine and particularly to a structure of a catalyst.

### Description of the Related Art

From the past, in a diesel engine, an oxidation catalyst for purifying hydrocarbon (HC) and carbon monoxide (CO), a NOx trap catalyst for reducing purification of nitrogen oxides (NOx), a diesel particulate filter for catching particulate matter (PM) and the like have been disposed in plural in series in an exhaust passage. These catalysts and filters purify HC, CO, NOx and PM contained in an exhaust gas from the engine.

On the other hand, an exhaust gas purifying device provided with a plurality of NOx trap catalysts or a multilayered NOx trap catalyst in an exhaust passage is developed in order to efficiently purify NOx exhausted from the engine at cold starting of the engine and the like (see Japanese Patent No. 4178858 or EP2241731A1).

In the diesel engine, it is known that an emission of NOx exhausted from the engine increases during a lean combustion operation.

Thus, by applying the technology in Japanese Patent No. 4178858, NOx exhausted from the engine during the lean combustion operation at a low temperature of the engine can be purified.

However, in the diesel engine, the oxidation catalyst and the diesel particulate filter for purifying HC, CO, and PM contained in the exhaust gas other than NOx are provided, and addition of the NOx trap catalysts or multilayering of the NOx trap catalyst increases the number of NOx trap catalysts and raises an exhaust pressure, which causes deterioration of engine performances or a cost increase by complication of a structure of the catalyst and is not preferable.

### SUMMARY OF THE INVENTION

The present invention was made in order to solve the above described problem and has an object to provide an exhaust gas purifying device of an internal combustion engine which can purify an exhaust gas with a simple structure.

In order to achieve the above described object, the present invention is provided with a first catalyst composed of a high-temperature NOx adsorption catalyst having oxidation performance and a low-temperature NOx adsorption catalyst disposed on a downstream side of the high-temperature NOx adsorption catalyst in an exhaust flow direction and starting adsorption of NOx at a temperature lower than the adsorption temperature of NOx by the high-temperature NOx adsorption catalyst and disposed in an exhaust passage of the internal combustion engine.

As a result, by disposing the low-temperature NOx adsorption catalyst which adsorbs NOx when a catalyst temperature is low as compared with the high-temperature NOx adsorption catalyst on the downstream side in the exhaust gas flow direction of the high-temperature NOx adsorption catalyst having oxidation performance so as to form the first catalyst and by disposing the first catalyst in the exhaust passage of the internal combustion engine, during a cold start of the internal combustion engine or the like and during a lean combustion operation and when the catalyst temperature is low, for example, hydrocarbon (HC) and carbon monoxide (CO) exhausted from the internal combustion engine can be oxidized and purified by the high-temperature NOx adsorption catalyst having oxidation performance, while nitrogen oxides (NOx) can be adsorbed by the low-temperature NOx adsorption catalyst. Moreover, when the exhaust temperature is high and the catalyst temperature is high, reducing purification can be performed by trapping NOx by the high-temperature NOx adsorption catalyst and by controlling an air/fuel ratio to rich setting (hereinafter referred to as NOx purge).

Therefore, the exhaust gas can be purified with a simple structure.

A second catalyst disposed in the exhaust passage on the downstream side of the first catalyst in the exhaust gas flow direction and carrying a precious metal is provided for reduction of NOx emitted from the first catalyst on an upstream side of the second catalyst.

As a result, by disposing the second catalyst carrying the precious metal in the exhaust passage on the downstream side of the first catalyst in the exhaust gas flow direction, NOx emitted from the first catalyst can be reliably reduced/purified by the precious metal of the second catalyst at NOx purge.

The second catalyst is formed by carrying the precious metal in a wall-flow filter.

As a result, by forming the second catalyst by carrying the precious metal in the wall-flow filter, the wall-flow filter can catch particulate matter (PM) in the exhaust gas, and CO generated during combustion of the caught PM can be purified by the carried precious metal. Moreover, since HC, CO, NOx, and PM in the exhaust gas can be purified with a simple structure only with the first catalyst and the second catalyst, performance deterioration of the internal combustion engine with an increase of an exhaust gas pressure and a cost of the catalysts can be suppressed.

A carried amount of the precious metal of the second catalyst is set such that the carried amount of the precious metal on the upstream side in the exhaust gas flow direction is larger than the carried amount of the precious metal on the downstream side of the exhaust gas flow.

As a result, by setting the carried amount of the precious metal on the upstream side of the second catalyst in the exhaust gas flow direction larger than the carried amount of the precious metal on the downstream side in the exhaust gas flow direction, NOx emitted from the first catalyst on the upstream side can be efficiently reduced/purified on the upstream side where the carried amount of the precious metal is larger. Moreover, CO generated during combustion of the PM caught in the wall-flow filter can be purified on the upstream side where the carried amount of the precious metal is large and the downstream side where the carried amount of the precious metal is small. By changing the carried amounts of the precious metal on the upstream side and the downstream side, a usage amount of the precious metal can be reduced, and a cost increase can be suppressed.

### BRIEF DESCRIPTION OF THE DRAWINGS

FIG. 1 is an outline configuration view of an engine to which an exhaust gas purifying device of an internal combustion engine according to the present invention is applied;
FIG. 2 is an outline configuration view of an upstream-side catalyst;
FIG. 3 is an outline configuration view of a downstream-side catalyst;
FIG. 4 is a graph illustrating a relationship between an inlet temperature of the upstream-side catalyst and NOx purification rate at each portion; and
FIG. 5 is a graph illustrating a process of NOx purification in a time series.

### DETAILED DESCRIPTION OF THE PREFERRED EMBODIMENTS

An embodiment of the present invention will be described below on the basis of the attached drawings.

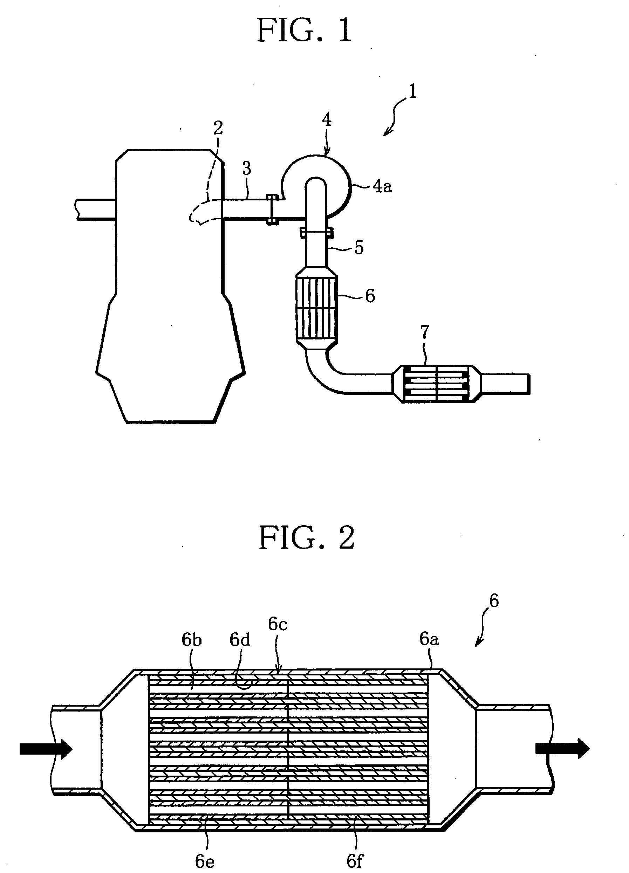

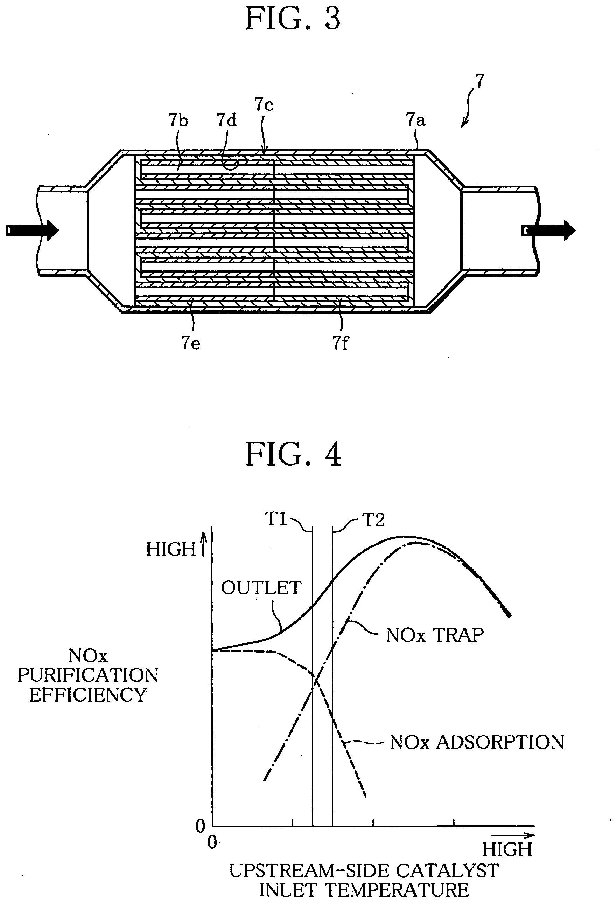

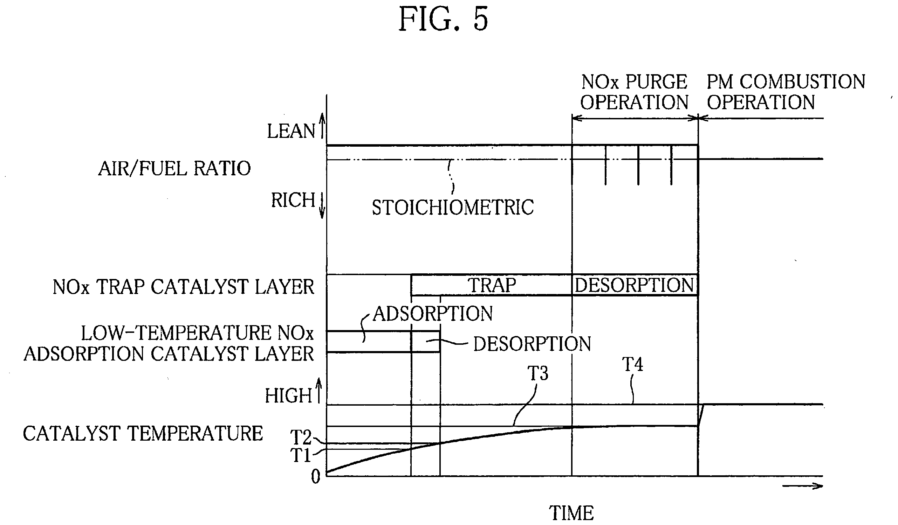

FIG. 1 illustrates an entire configuration view of an engine (internal combustion engine) 1 to which an exhaust gas purifying device of an internal combustion engine according to the present invention is applied. FIG. 2 is an outline configuration view of an upstream-side catalyst 6 disposed on an exhaust pipe 5 of the engine 1. FIG. 3 is an outline configuration view of a downstream-side catalyst 7 disposed on the exhaust pipe 5 of the engine 1. Arrows in FIGs. 2 and 3 indicate exhaust gas flow directions. Moreover, FIG. 4 is a graph illustrating a relationship between an inlet temperature of the upstream-side catalyst and a NOx purification rate at each portion. A solid line "outlet" in FIG. 4 indicates a purification rate of NOx at an outlet of the exhaust pipe 5, a broken line "NOx adsorption" indicates a NOx purification rate of a low-temperature NOx adsorption catalyst layer 6f, and a one-dot chain line "NOx trap" indicates a NOx purification rate of a NOx trap catalyst layer 6e. FIG. 5 is a graph illustrating a process of NOx purification in a time series. An air/fuel ratio, a state of each catalyst layer, and a catalyst temperature are illustrated from an upper stage. A two-dot chain line in FIG. 5 indicates stoichiometric. A first predetermined temperature T1 in FIGs. 4 and 5 indicates a temperature (approximately 250°C) at which desorption of NOx adsorbed to the low-temperature NOx adsorption catalyst layer 6f is started, and a second predetermined temperature T2 indicates a temperature (approximately 300°C) at which desorption of NOx adsorbed to the low-temperature NOx adsorption catalyst layer 6f is finished. Moreover, a third predetermined temperature T3 indicates a temperature at which desorption of NOx adsorbed to the NOx trap catalyst layer 6e becomes possible, and a fourth predetermined temperature T4 indicates a PM combustible temperature (approximately 650°C) at which PM deposited on the downstream side catalyst 7 can be combusted. A temperature range lower than the first predetermined temperature T1 is lower than an active temperature of the precious metal, and a temperature range from the first predetermined temperature T1 to the second predetermined temperature T2 is included in the active temperature of the precious metal.

The engine 1 is a multi-cylinder cylinder direct injection-type internal combustion engine (common-rail type diesel engine, for example) and in more detail, has a configuration in which a high-pressure fuel pressure-accumulated in a common rail is supplied to a fuel injection nozzle provided in each cylinder and can be injected into a combustion chamber of each cylinder from the fuel injection nozzle at arbitrary injection timing and injection amount.

As illustrated in FIG. 1, in the engine 1, an exhaust port 2 communicating with a combustion chamber of the engine 1, not shown, is formed in each cylinder. And an exhaust manifold 3 is connected to the engine 1 so as to communicate with each of the exhaust ports 2.

On a downstream of the exhaust manifold 3, a turbine housing 4a of a turbo charger 4 which compresses new air sucked by using energy of an exhaust gas and supplies it to the combustion chamber of the engine 1 and the exhaust pipe (exhaust passage) 5 are provided so as to communicate with each other.

In the exhaust pipe 5, the upstream-side catalyst (corresponding to a first catalyst of the present invention) 6 and the downstream-side catalyst (corresponding to a second catalyst of the present invention) 7 are provided in order from the upstream in the exhaust gas flow direction so as to communicate with each other.

In the upstream-side catalyst 6, a honeycomb carrier in which both ends of a passage 6b through which an exhaust gas passes are opened into a cylindrical casing 6a or a so-called open-flow honeycomb 6c is provided. The passage 6b is formed of a porous or metal-foil wall 6d. On the porous wall 6d forming the passage 6b of the open-flow honeycomb 6c, the NOx trap catalyst layer (corresponding to a high-temperature NOx adsorption catalyst of the present invention) 6e and the low-temperature NOx adsorption catalyst layer (corresponding to a low-temperature NOx adsorption catalyst of the present invention) 6f are formed in order from the upstream side in the exhaust gas flow direction.

The NOx trap catalyst layer 6e is formed containing alkali metal (potassium (K), sodium (Na) and the like) and alkaline-earth metal (barium (Ba) and the like) having NOx trapping performance under a lean atmosphere, a precious metal (platinum (Pt), palladium (Pd), rhodium (Rh)) having oxidation performance, and an additive (cerium oxide (CeO₂), zirconium oxide (ZrO₂), titanium oxide (TiO₂) and the like) having a function of improving a catalytic function in an alumina base material. As illustrated in FIGs. 4 and 5, the NOx trap catalyst layer 6e starts trapping of NOx when a catalyst temperature is the first predetermined temperature T1 which is a temperature lower than the second predetermined temperature T2 which is a temperature at which desorption of NOx of the low-temperature NOx adsorption catalyst layer 6f is finished (NOx desorption temperature). The NOx trap catalyst layer 6e reduces/purifies trapped NOx by performing a NOx purge operation causing an air/fuel ratio to be intermittently a rich air/fuel ratio when the catalyst temperature is the third predetermined temperature T3 or higher. That is, the NOx trap catalyst layer 6e is a catalyst which starts adsorption (trapping) of NOx at a temperature lower than the NOx desorption end temperature of the low-temperature NOx adsorption catalyst layer 6f.

Moreover, the low-temperature NOx adsorption catalyst layer 6f is formed containing a NOx adsorbent (iron (Fe) or silver (Ag) as transition metals, zeolite containing transition metal and the like, for example) and a promoter (CeO₂, ZrO₂, TiO₂) in an alumina base material. The NOx adsorbent of the low-temperature NOx adsorption catalyst layer 6f has a high adsorption capacity of nitrogen oxides (NOx) when the catalyst temperature is low as compared with the NOx trap catalyst layer 6e. As illustrated in FIGs. 4 and 5, the low-temperature NOx adsorption catalyst layer 6f starts adsorption of NOx when the catalyst temperature is lower than the first predetermined temperature T1 which is lower than the active temperature of the precious metal. That is, the low-temperature NOx adsorption catalyst layer 6f starts adsorption of NOx at a temperature lower than the adsorption temperature of NOx by the NOx trap catalyst layer 6e. Moreover, the low-temperature NOx adsorption catalyst layer 6f performs desorption of NOx when the catalyst temperature is at a temperature of the first predetermined temperature T1 or higher and lower than the second predetermined temperature T2 which is within the active temperature of the precious metal. That is, the low-temperature NOx adsorption catalyst layer 6f is a catalyst having a function of starting adsorption of NOx at a temperature lower than the active temperature of the precious metal and of starting and finishing desorption of NOx in the active temperature.

The downstream-side catalyst 7 is provided with a honeycomb carrier in which an upstream side and a downstream side of a passage 7b through which an exhaust gas passes are alternately closed by a plug in a cylindrical casing 7a or a so-called wall-flow filter 7c. The passage 7b is formed of a porous wall 7d. A NOx reducing catalyst layer 7e and a PM combustion catalyst layer 7f are formed in order from the upstream side in the exhaust gas flow direction on the porous wall 7d forming the passage 7b of the wall-flow filter 7c.

The NOx reducing catalyst layer 7e is formed containing a precious metal (Rh, Pd, Rt) mainly having Rh and an additive (CeO₂, ZrO₂, TiO₂ and the like, for example) in an alumina base material. A carried amount of the precious metal of the NOx reducing catalyst layer 7e is set larger than the carried amount of precious metal of the PM combustion catalyst layer 7f.

Moreover, the PM combustion catalyst layer 7f is formed containing a precious metal (Rt, Pd, Rh) and an additive (CeO₂, ZrO₂, TiO₂ and the like, for example) in an alumina base material.

An operation and an effect of the exhaust gas purifying device of the internal combustion engine according to the present invention configured as above will be described below.

As illustrated in FIG. 5, in the NOx trap catalyst layer 6e of the upstream-side catalyst 6, by means of an operation of K, Na, and Ba as a NOx trap agent and a precious metal having oxidation performance, if the temperature of the upstream-side catalyst 6 is at the first predetermined temperature T1 (approximately 250°C) or higher, the nitrogen oxides (NOx) are trapped under a lean atmosphere, while if the temperature of the upstream-side catalyst 6 is at the third predetermined temperature T3 or higher, the NOx purge operation of causing the air/fuel ratio to be intermittently a rich air/fuel ratio is operated so as to reduce and purify the trapped NOx under a rich atmosphere. Moreover, in the NOx trap catalyst layer 6e, hydrocarbon (HC) and carbon monoxide generated in a state in which a temperature of each catalyst layer in the upstream-side catalyst 6 and the downstream-side catalyst 7 has not risen and the temperature of the upstream-side catalyst 6 is a low temperature at the second predetermined temperature T2 (300°C, for example) or less at a start of the engine 1 or the like or a so-called cold phase are subjected to oxidation reaction by the precious metal and purified. Then, in the low-temperature NOx adsorption catalyst layer 6f of the upstream-side catalyst 6, NOx under the lean atmosphere in a state in which the temperature of each catalyst layer in the upstream-side catalyst 6 and the downstream-side catalyst 7 has not risen and the temperature of the upstream-side catalyst 6 is a low temperature lower than the first predetermined temperature T1 (approximately 250°C) at a start of the engine 1 or the like is adsorbed by means of an operation of the NOx adsorbent. Then, when the temperature of the upstream-side catalyst 6 rises to the first predetermined temperature T1 or higher, the adsorbed NOx is desorbed.

Moreover, the wall-flow filter 7c of the downstream-side catalyst 7 catches particulate matter (PM) in the exhaust gas. The NOx reducing catalyst layer 7e of the downstream-side catalyst 7 reduces and purifies NOx emitted from the NOx trap catalyst layer 6e and the low-temperature NOx adsorption catalyst layer 6f during the NOx purge operation in which the air/fuel ratio is made rich in order to purify NOx trapped in the NOx trap catalyst layer 6e of the upstream-side catalyst 6 and NOx adsorbed in the low-temperature NOx adsorption catalyst layer 6f. Moreover, the PM combustion catalyst layer 7f combusts and purifies PM caught by the wall-flow filter 7c during the PM combustion operation for raising the temperature of the downstream-side catalyst 7 to the fourth predetermined temperature T4, that is, a so-called PM combustible temperature (650°C, for example). Then, in the NOx reducing catalyst layer 7e and the PM combustion catalyst layer 7f, CO generated during PM combustion is subjected to oxidation reaction by the precious metal and purified.

As described above, HC and CO generated under the lean atmosphere in the cold phase can be oxidized and purified by the NOx trap catalyst layer 6e of the upstream-side catalyst 6, NOx can be adsorbed by the low-temperature NOx adsorption catalyst layer 6f of the upstream-side catalyst 6, and PM can be caught by the wall-flow filter 7c of the downstream-side catalyst 7. Moreover, NOx generated under the lean atmosphere during a normal operation can be trapped by the NOx trap catalyst layer 6e of the upstream-side catalyst 6 and reduced/purified. Furthermore, CO generated during PM combustion can be purified by the NOx reducing catalyst layer 7e and the PM combustion catalyst layer 7f.

Therefore, by reliably purifying the exhaust gas with the simple structure of the upstream-side catalyst 6 and the downstream-side catalyst 7 as described above, performance deterioration of the engine 1 with an increase in an exhaust gas pressure can be suppressed, and favorable exhaust gas purification performance can be obtained while a catalyst cost is suppressed.

Moreover, by providing the NOx trap catalyst layer 6e on the exhaust pipe 5 on the uppermost stream of the exhaust gas flow which is the closest to the engine 1, time required for temperature rise of the precious metal can be reduced, and HC and CO can be subjected to oxidation reaction and be purified. Moreover, the NOx reducing performance can be improved.

Moreover, by forming the low-temperature NOx adsorption catalyst layer 6f on the downstream side of the NOx trap catalyst layer 6e in the exhaust gas flow direction, HC and CO can be purified in the NOx trap catalyst layer 6e, and by reducing HC and CO in the exhaust gas, NOx adsorptivity of the low-temperature NOx adsorption catalyst layer 6f can be improved.

An embodiment of the invention has been explained as above, but embodiments of the invention are not limited to this embodiment.

For example, the exhaust gas purifying device of the internal combustion engine of the present invention is applied to the common-rail type diesel engine in this embodiment, but this is not limiting, and it may be applied to a gasoline lean burn engine, for example.

## Claims

1. An exhaust gas purifying device of an internal combustion engine provided with a first catalyst (6) disposed in an exhaust passage (5) of an internal combustion engine (1), **characterized in that**
said first catalyst (6) is composed of:
a high-temperature NOx adsorption catalyst (6e) having oxidation performance; and
a low-temperature NOx adsorption catalyst (6f) disposed on a downstream side of said high-temperature NOx adsorption catalyst (6e) in an exhaust gas flow direction and starting adsorption of NOx at a temperature lower than a NOx adsorption temperature by said high-temperature NOx adsorption catalyst (6e);
wherein a second catalyst (7) disposed in said exhaust passage (5) on the downstream side of said first catalyst (6) in the exhaust gas flow direction and carrying a precious metal is provided for reduction of NOx emitted from the first catalyst (6) on an upstream side of the second catalyst (7),
wherein said second catalyst (7) is formed by carrying said precious metal in a wall-flow filter (7c), and
wherein a carried amount of said precious metal of said second catalyst (7) is set so that a carried amount of said precious metal on the upstream side in an exhaust gas flow direction is larger than a carried amount of said precious metal on a downstream side in said exhaust gas flow direction.

## Patentansprüche

1. Abgasreinigungsvorrichtung eines Verbrennungsmotors, die mit einem ersten Katalysator (6) versehen ist, der in einem Auslasskanal (5) eines Verbrennungsmotors (1) angeordnet ist, **dadurch gekennzeichnet, dass**
sich der erste Katalysator (6) zusammensetzt aus:
einem Hochtemperatur-NOx-Adsorptionskatalysator (6e) mit Oxidationsleistung; und
einem Niedrigtemperatur-NOx-Adsorptionskatalysator (6f), der auf einer Stromabwärtsseite des Hochtemperatur-NOx-Adsorptionskatalysators (6e) in Abgasströmungsrichtung angeordnet ist und Adsorption von NOx bei einer Temperatur beginnt, die niedriger als eine NOx-Adsorptionstemperatur durch den Hochtemperatur-NOx-Adsorptionskatalysator (6e) ist;
wobei ein zweiter Katalysator (7) vorgesehen ist, der im Auslasskanal (5) auf der Stromabwärtsseite des ersten Katalysators (6) in Abgasströmungsrichtung angeordnet ist und ein Edelmetall zur Reduzierung von NOx trägt, das vom ersten Katalysator (6) auf einer Stromaufwärtsseite des zweiten Katalysators (7) ausgestoßen wird,
wobei der zweite Katalysator (7) dadurch gebildet ist, dass er das Edelmetall in einem wanddurchströmten (Wall-Flow-) Filter (7c) trägt, und
wobei eine getragene Menge des Edelmetalls des zweiten Katalysators (7) so eingestellt ist, dass eine getragene Menge des Edelmetalls auf der Stromaufwärtsseite in Abgasströmungsrichtung größer als eine getragene Menge des Edelmetalls auf einer Stromabwärtsseite in Abgasströmungsrichtung ist.

## Revendications

1. Dispositif de purification de gaz d'échappement d'un moteur à combustion interne prévu avec un premier catalyseur (6) disposé dans un passage d'échappement (5) d'un moteur à combustion interne (1), **caractérisé en ce que** :
ledit premier catalyseur (6) est composé de :
un catalyseur d'adsorption de NOx à haute température (6e) présentant une performance d'oxydation ; et
un catalyseur d'adsorption de NOx à basse température (6f) disposé sur un côté en aval dudit catalyseur d'adsorption de NOx à haute température (6e) dans une direction d'écoulement de gaz d'échappement et commençant l'adsorption de NOx à une température inférieure à une température d'adsorption de NOx par ledit catalyseur d'adsorption de NOx à haute température (6e) ;
dans lequel on prévoit un second catalyseur (7) disposé dans ledit passage d'échappement (5) sur le côté en aval dudit premier catalyseur (6) dans la direction d'écoulement de gaz d'échappement et portant un métal précieux pour la réduction de Nox émis à partir du premier catalyseur (6) sur un côté en amont du second catalyseur (7),
dans lequel ledit second catalyseur (7) est formé en portant ledit métal précieux dans un filtre à écoulement sur les parois (7c), et
dans lequel une quantité portée dudit métal précieux dudit second catalyseur (7) est déterminée de sorte qu'une quantité portée dudit métal précieux sur le côté en amont dans une direction d'écoulement de gaz d'échappement est supérieure à une quantité portée dudit métal précieux sur un côté en aval dans ladite direction d'écoulement de gaz d'échappement.
